# EUROPEAN PATENT APPLICATION

(11) **EP 4 778 780 A1**
(43) Date of publication of application: **22.07.2026**
(21) Application number: 26152313.8
(22) Date of filing: 16.01.2026
(51) Int. Cl.: B60N 2/28

(54) **CHILD CARRIER**

(30) Priority: 16.01.2025 CN 202510074290
(71) Applicant: Wonderland Switzerland AG, 6312 Steinhausen (CH)
(72) Inventor: ZHAO, Guanghui, Dongguan, Guangdong 523648 (CN)
(74) Representative: Pfenning, Meinig & Partner mbB

(57) **Abstract**

The present invention relates to a child carrier (10), including a carrier body (100) and a connecting device (200). The carrier body (100) includes a first detachable mechanism (150). The connecting device (200) includes a second detachable mechanism (210) and a connecting mechanism (230). The second detachable mechanism (210) is capable of being locked with or unlocked from the first detachable mechanism (150). The connecting mechanism (230) is connected to the second detachable mechanism (210), and the connecting mechanism (230) is switchable between a connected state and a disconnected state. When the connecting mechanism (230) is in the connected state, the connecting mechanism (230) is adapted to be connected to a vehicle seat; when the connecting mechanism (230) is in the disconnected state, the connecting mechanism (230) is adapted to be disconnected from the vehicle seat.

## Description

### TECHNICAL FIELD

The present invention relates to the technical field of child carriers, and in particular, to an infant carrier.

### BACKGROUND

Currently, many child carriers on the market, such as infant car seats, generally do not themselves have a connecting device (such as an ISOFIX connecting device) capable of being connected to a vehicle. Typically, the infant car seat itself is configured with a connecting device, through which the infant car seat is connected to relevant mechanisms on a vehicle seat. However, this increases the weight of the child carrier, making it more laborious to carry the child carrier.

### SUMMARY

According to various embodiments of the present application, a child carrier is provided. The child carrier according to the present application can be directly connected to a vehicle seat and reduce its weight when carried.

A child carrier includes a carrier body and a connecting device. The connecting device is detachably connected to the carrier body. The carrier body includes a first detachable mechanism. The connecting device includes a second detachable mechanism and a connecting mechanism. The second detachable mechanism is capable of being locked with or unlocked from the first detachable mechanism. The connecting mechanism is connected to the second detachable mechanism. The connecting mechanism is switchable between a connected state and a disconnected state. When the connecting mechanism is in the connected state, the connecting mechanism is adapted to be connected to a vehicle seat; when the connecting mechanism is in the disconnected state, the connecting mechanism is adapted to be disconnected from the vehicle seat.

The aforementioned child carrier includes the carrier body and the connecting device. The carrier body includes the first detachable mechanism, and the connecting device includes the second detachable mechanism. The second detachable mechanism and the first detachable mechanism are capable of being locked with each other or unlocked from each other, thereby achieving a detachable connection between the carrier body and the connecting device. The connecting device further includes the connecting mechanism connected to the second detachable mechanism. The connecting mechanism is switchable between the connected state and the disconnected state, enabling the connecting device to be connected to or disconnected from the vehicle seat. As such, when the child carrier is required to be installed on a vehicle seat, the connecting device can be installed on the carrier body by means of the locking between the first detachable mechanism and the second detachable mechanism, and the connection between the connecting device and the vehicle seat is achieved through the connecting mechanism of the connecting device, i.e., enabling the connection between the carrier body and the vehicle seat. When the child carrier is required to be carried, the carrier body can be carried alone by unlocking the first detachable mechanism from the second detachable mechanism, reducing the weight of the child carrier when carried.

In some embodiments, the first detachable mechanism includes a first locking member, the second detachable mechanism includes a second locking member. The first locking member and the second locking member are selectively capable of being locked with each other or unlocked from each other.

In some embodiments, the first locking member is movably arranged on the carrier body and is switchable between a locked position and an unlocked position. When the first locking member is at the locked position, the first locking member is adapted to be locked with the second locking member, when the first locking member is at the unlocked position, the first locking member is adapted to be unlocked from the second locking member.

Alternatively, the second locking member is movably arranged on the connecting device and is switchable between a locked position and an unlocked position. When the second locking member is at the locked position, the second locking member is adapted to be locked with the first locking member, when the second locking member is at the unlocked position, the second locking member is adapted to be unlocked from the first locking member.

In some embodiments, the first locking member is rotatably provided on the carrier body and is rotatable between the locked position and the unlocked position; or, the second locking member is rotatably provided on the connecting device and is rotatable between the locked position and the unlocked position.

In some embodiments, the first locking member includes a hook portion, the second locking member includes a groove portion, and the hook portion and the groove portion are capable of being locked with each other or unlocked from each other. Alternatively, the second locking member includes a hook portion, the first locking member includes a groove portion, and the hook portion and the groove portion are capable of being locked with each other or unlocked from each other.

In some embodiments, the first locking member is movably arranged on the carrier body and is switchable between a locked position and an unlocked position. When the first locking member is at the locked position, the first locking member is adapted to be locked with the second locking member, when the first locking member is at the unlocked position, the first locking member is adapted to be unlocked from the second locking member.

The first detachable mechanism further includes:
a first operating member drivingly connected to the first locking member, the first operating member being adapted to be operated to drive the first locking member to switch from the locked position to the unlocked position.

In some embodiments, the first detachable mechanism further includes:
a first driving member connected to the first locking member, the first driving member being drivingly connected to the first operating member.

The first operating member is adapted to be operated to drive the first driving member to move. The first driving member drives the first locking member to switch from the locked position to the unlocked position.

In some embodiments, the first detachable mechanism further includes:
a driving reset member adapted to apply a force to the first driving member to cause the first driving member to drive the first locking member to switch from the unlocked position to the locked position.

In some embodiments, the first detachable mechanism further includes:
a traction member, one end of the traction member being connected to the first operating member, another end of the traction member being connected to the first driving member.

In some embodiments, the first locking member is movably arranged on the carrier body and is switchable between a locked position and an unlocked position. The first detachable mechanism further includes:
a fixing base provided with an insertion groove and an insertion hole in communication with the insertion groove.

At least a portion of the second locking member is adapted to be inserted into the insertion groove through the insertion hole. When the first locking member is at the locked position, at least a portion of the first locking member is adapted to extend into the insertion groove and be locked with the second locking member; when the first locking member is at the unlocked position, the portion of the first locking member is adapted to be unlocked from the second locking member.

In some embodiments, the fixing base is further provided with a through hole in communication with the insertion groove. When the first locking member is at the locked position, at least a portion of the first locking member is adapted to extend into the insertion groove through the through hole and be locked with the second locking member; when the first locking member is at the unlocked position, the portion of the first locking member is adapted to move out of the insertion groove through the through hole and be unlocked from the second locking member.

In some embodiments, the first locking member is pivotally connected to the fixing base and is rotatable between the locked position and the unlocked position.

In some embodiments, the second locking member includes a groove portion, the first locking member includes a hook portion. When at least a portion of the second locking member is inserted into the insertion groove, the groove portion is located within the insertion groove, when the hook portion of the first locking member is at the locked position, the hook portion of the first locking member is adapted to extend into the insertion groove to be locked with the groove portion.

In some embodiments, the connecting device further includes a rod member. Two second detachable mechanisms are provided. The two second detachable mechanisms are spaced apart and are connected to the rod member.

In some embodiments, the connecting mechanism includes:
an engagement member switchable between a closed position and an open position.

When the engagement member is at the closed position, the engagement member is adapted to be engaged with the vehicle seat; when the engagement member is at the open position, the engagement member is adapted to be disengaged from the vehicle seat.

In some embodiments, the connecting mechanism further includes:
an engagement reset member adapted to apply a force to the engagement member to cause the engagement member to pivot toward the open position.

In some embodiments, the connecting mechanism further includes:
a second driving member switchable between a first position and a second position.

When the second driving member is at the first position, the second driving member limits the engagement member in the closed position; when the second driving member is at the second position, the second driving member allows the engagement member to switch to the open position.

In some embodiments, the second driving member includes a limiting pin. The engagement member includes a blocking portion. When the second driving member is at the first position, the limiting pin abuts against the blocking portion to limit the engagement member in the closed position.

In some embodiments, the connecting mechanism further includes:
a second operating member drivingly connected to the second driving member, the second operating member being adapted to be operated to drive the second driving member to switch from the first position to the second position.

In some embodiments, the connecting mechanism further includes:
a linkage member, one end of the linkage member being connected to the second operating member, another end of the linkage member being drivingly connected to the second driving member.

The second operating member is adapted to be operated to drive the linkage member to move, and the linkage member drives the second driving member to switch from the first position to the second position.

In some embodiments, one of the linkage member and the second driving member is provided with a driving oblique slot, another of the linkage member and the second driving member is provided with a driving pin. The driving pin is inserted into the driving oblique slot and slides along the driving oblique slot. The second operating member is adapted to be operated to drive the linkage member to move. The linkage member drives the second driving member to move from the first position to the second position by means of the cooperation of the driving oblique slot and the driving pin.

In some embodiments, the connecting device further includes a rod member. The rod member has a hollow cavity. The linkage member is movably provided in the hollow cavity. The rod member is further provided with a strip-shaped hole in communication with the hollow cavity. The second operating member is movably provided on the rod member. The second operating member includes an operation portion and a positioning portion. The operation portion is exposed outside the hollow cavity to be operated. The positioning portion extends into the hollow cavity through the strip-shaped hole to be connected to the rod member.

In some embodiments, the connecting mechanism further includes:
a limiting reset member adapted to apply a force to the second driving member to cause the second driving member to move toward the first position.

In some embodiments, the connecting mechanism further includes:
a bracket, on which the second driving member being movably provided; and
a blocking pin fixedly arranged on the bracket.

The second driving member includes an abutting portion. The abutting portion is located on a side of the blocking pin adjacent to the engagement member. Two ends of the limiting reset member abut against the blocking pin and the second driving member respectively.

In some embodiments, the connecting mechanism further includes:
a second housing including a mounting cavity; the second driving member and at least a portion of the engagement member being provided in the mounting cavity.

When the engagement member is in the closed position, the engagement member can extend out of the mounting cavity to be engaged with the vehicle seat.

In some embodiments, the connecting mechanism further includes:
an indicator assembly connected to the second driving member, the indicator assembly having a first indicator mark and a second indicator mark.

The second housing is provided with an indicator window in communication with the mounting cavity. When the second driving member is at the first position, the first indicator mark faces the indicator window and is visible through the indicator window; when the second driving member is at the second position, the second indicator mark faces the indicator window and is visible through the indicator window.

In some embodiments, the connecting device further includes a rod member. Two connecting mechanisms are provided. The two connecting mechanisms are spaced apart and provided at two ends of the rod member respectively.

### BRIEF DESCRIPTION OF THE DRAWINGS

FIG. 1 is a schematic structural view of a child carrier according to an embodiment of the present invention, with a carrier body and a connecting device being locked with each other;
FIG. 2 is a rear view of the child carrier shown in FIG. 1;
FIG. 3 is another schematic structural view of the child carrier according to an embodiment of the present invention, with the carrier body and the connecting device being unlocked from each other;
FIG. 4 is a schematic structural view of the connecting device shown in FIG. 3;
FIG. 5 is a sectional view of the child carrier taken along line A-A shown in FIG. 2, with the carrier body and the connecting device being locked with each other;
FIG. 6 is another sectional view of the child carrier taken along line A-A shown in FIG. 2, with the carrier body and the connecting device are unlocked from each other;
FIG. 7 is a schematic structural view of the connecting device shown in FIG. 4 with a second housing omitted;
FIG. 8 is a schematic structural view of the connecting device shown in FIG. 4 with the second housing, and a bracket omitted;
FIG. 9 is a sectional view taken along line B-B of FIG. 4, with an engagement member at a closed position and a second driving member at a first position;
FIG. 10 is another sectional view taken along line B-B of FIG. 4, with the engagement member at an open position and the second driving member at a second position;
FIG. 11 is a sectional view taken along line C-C of FIG. 4, with the engagement member at the closed position and the second driving member at the first position;
FIG. 12 is another sectional view taken along line C-C of FIG. 4, with the engagement member at the open position and the second driving member at the second position;
FIG. 13 is an enlarged view of portion E in FIG. 11;
FIG. 14 is an enlarged view of portion F in FIG. 12;
FIG. 15 is an enlarged view of portion G in FIG. 11; and
FIG. 16 is an enlarged view of portion H in FIG. 12.

### Illustration for reference Numerals:

10: child carrier; 100: carrier body; 110: carrier housing; 111: backrest portion; 112: leg rest portion; 113: occupant space; 114: accommodating cavity; 115: receiving groove; 116: operation port; 117: pushing member; 1171: penetration hole; 118: mounting port; 120: handle; 130: pivot joint; 140: canopy; 150: first detachable mechanism; 151: first locking member; 1511: pivot portion; 1512: hook portion; 152: fixing base; 1521: insertion groove; 1522: through hole; 1523: insertion hole; 153: first operating member; 154: traction member; 1541: traction end head; 155: first driving member; 1551: traction portion; 1551a: receiving cavity; 1551b: receiving hole; 156: driving reset member;
200: connecting device; 210: second detachable mechanism; 211: second locking member; 2111: end surface; 2112: groove portion; 212: mounting ring; 213: first housing; 2131: secondary end surface; 2132: secondary groove portion; 214: secondary mounting ring; 220: rod member; 221: hollow cavity; 222: strip-shaped hole; 230: connecting mechanism; 231: engagement member; 2310: engagement hole; 2311: pivot connection portion; 2312: blocking portion; 2312a: blocking surface; 2313: recess; 232: bracket; 2320: mounting groove; 2321: first mounting member; 2321a: first elongated hole; 2322: second mounting member; 2322a: second elongated hole; 2322b: communication hole; 2323: connecting member; 2331: pivot pin; 2332: blocking pin; 2341: engagement reset member; 2341a: torsion spring; 2341b: main body part; 2341c: end portion; 2342: limiting reset member; 235: second driving member; 2350: limiting groove; 2351: limiting pin; 2352: first mounting portion; 2352a: first mounting hole; 2353: second mounting portion; 2353a: second mounting hole; 2354: connecting plate; 2355: abutting portion; 2355a: sleeve column; 2356: driving assembly; 2356a: first driving portion; 2356b: second driving portion; 2357: connection portion; 2358: driving pin; 2359: stopping portion; 236: second operating member; 2361: positioning portion; 2362: shielding portion; 2363: operation portion; 237: linkage member; 2371: positioning hole; 2372: driving oblique slot; 2372a: first end; 2372b: second end; 238: indicator assembly; 2381: first indicator mark; 2382: second indicator mark; 239: second housing; 2390: mounting cavity; 2391: indicator window; 2392: communication port; 2393: engagement groove; 2394: engagement port;
102: pivot shaft; 20: engagement rod.

### DETAILED DESCRIPTION OF THE EMBODIMENTS

To make the above objects, features, and advantages of the present application more apparent and understandable, the following describes the specific embodiments of the present application in detail with reference to the accompanying drawings. Numerous specific details are set forth in the following description to facilitate a full understanding of the present application. However, the present application can be implemented in many other ways different from those described herein. Those skilled in the art can make similar improvements without departing from the spirit of the present application. Therefore, the present application is not limited by the specific embodiments disclosed below.

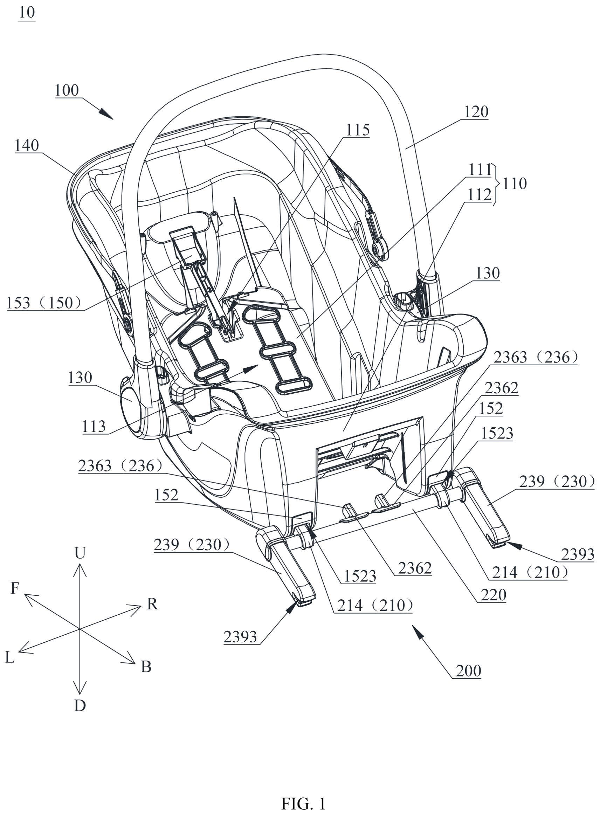

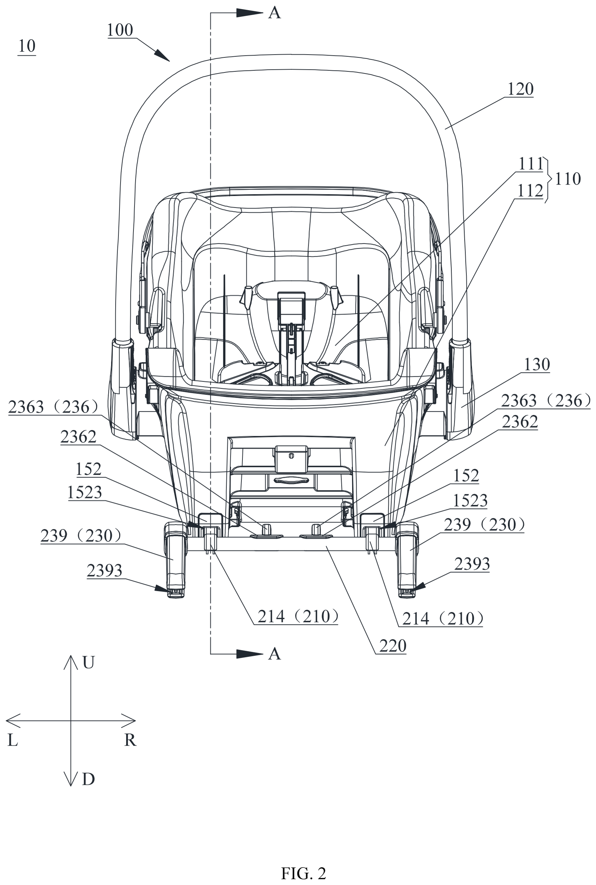

As shown in FIGS. 1 and 2, an embodiment of the present invention provides a child carrier 10. The child carrier 10 can be an infant car seat or a child safety seat, etc. In an embodiment, the child carrier 10 is an infant car seat. The child carrier 10 includes a carrier body 100 and a connecting device 200. The carrier body 100 and the connecting device 200 are detachably connected to each other. In an embodiment, the carrier body 100 includes a carrier housing 110. The carrier housing 110 includes a backrest portion 111 and a leg rest portion 112 connected to each other. The backrest portion 111 and the leg rest portion 112 are arranged at a certain angle relative to each other. The carrier housing 110 defines an occupant space 113 for accommodating a child. Further, the carrier body 100 can further include a handle 120. The handle 120 is substantially of a U-shaped rod structure. Two ends of the handle 120 are pivotally connected to the left and right sides of the carrier housing 110 via two pivot joints 130, respectively. The handle 120 can pivot relative to the carrier housing 110 to a substantially vertical carrying position (as shown in FIGS. 1 and 2) for easy carrying, or can pivot relative to the carrier housing 110 to a folded position (not shown in the figures) at which the handle 120 rests substantially flat on the carrier housing 110. The carrier body 100 can further include a canopy 140 provided on the carrier housing 110. The canopy 140 is switchable between a deployed state and a folded state. When the canopy 140 is at the deployed position, the canopy 140 can cover at least a portion of the top of the occupant space 113 to provide shading for the accommodated child. When the canopy 140 is in the folded state, the canopy 140 can be folded and stacked on the top of the backrest portion 111.

It should be noted that orientational terms such as "frontward", "rearward", "leftward", "rightward", "upward", and "downward" will be used below to describe the embodiments. The orientational terms "frontward", "rearward", "leftward", "rightward", "upward", and "downward" of the carrier body 100 in this application respectively correspond to the "front", "rearward", "leftward", "rightward", "upward", and "downward" directions of the vehicle when the carrier body 100 is installed on the vehicle (as shown in FIG. 1). Arrows F, B, L, R, U, D in the figures schematically show the "frontward", "rearward", "leftward", "rightward", "upward", and "downward" directions, respectively. These orientational terms are only used to make the description of the technical solution of the embodiments of the present invention clearer, and are only used to represent the relative positional relationships between different components, and are not intended to unduly limit the protection scope of the present invention.

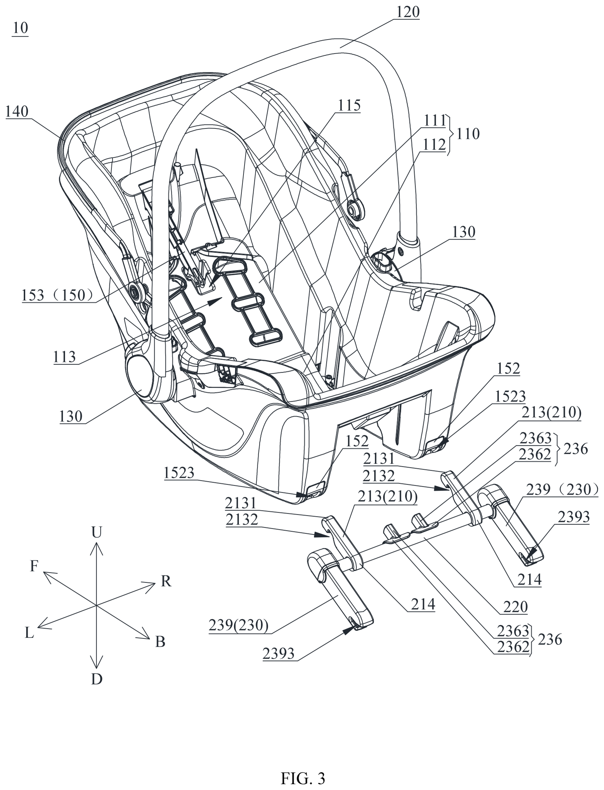

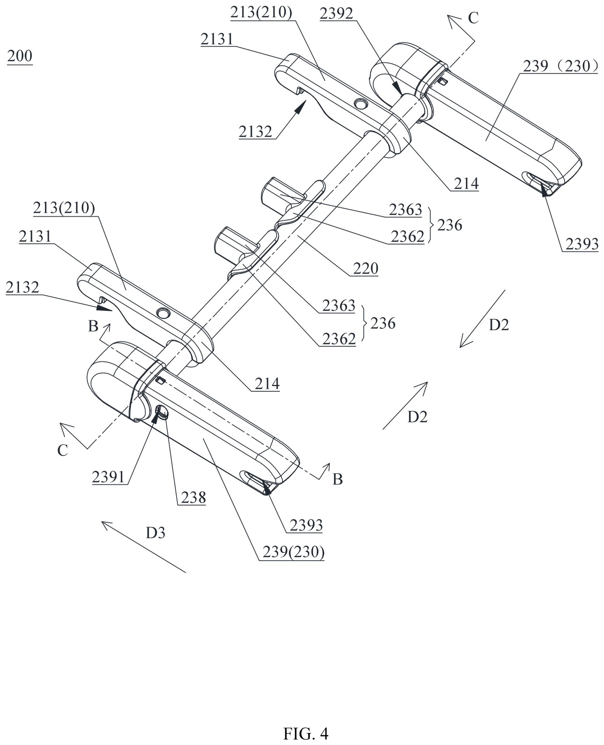

Further, as shown in FIGS. 3 and 4, the carrier body 100 includes a first detachable mechanism 150. The connecting device 200 includes a second detachable mechanism 210. The first detachable mechanism 150 and the second detachable mechanism 210 are capable of being locked with each other or unlocked from each other. The first detachable mechanism 150 and the second detachable mechanism 210 achieve a detachable connection between the carrier body 100 and the connecting device 200. That is, when the second detachable mechanism 210 is locked with the first detachable mechanism 150, the connecting device 200 is installed on the carrier body 100; when the second detachable mechanism 210 is unlocked from the first detachable mechanism 150, the connecting device 200 is capable of being detached from the carrier body 100. In an embodiment, there are two first detachable mechanisms 150, which are respectively provided on the left and right sides of the carrier body 100, specifically provided on the left and right sides of a rear side surface of the leg rest portion 112. Correspondingly, there are also two second detachable mechanisms 210. In an embodiment, the connecting device 200 further includes a rod member 220. The two second detachable mechanisms 210 are spaced apart and respectively connected to the rod member 220. In an embodiment, the rod member 220 has a straight tubular structure. Additionally, the connecting device 200 can further include a connecting mechanism 230 connected to the second detachable mechanism 210. The connecting mechanism 230 is switchable between a connected state and a disconnected state. When the connecting mechanism 230 is in the connected state, the connecting mechanism 230 is adapted to be connected to a vehicle seat; when the connecting mechanism 230 is in the disconnected state, the connecting mechanism 230 is adapted to be disconnected from the vehicle seat. In an embodiment, there are also two connecting mechanisms 230, which are spaced apart on the rod member 220. Two first detachable mechanisms 150, two second detachable mechanisms 210, and two connecting mechanisms 230 are provided, which can allow the carrier body 100 to be installed on the vehicle seat more stably and securely.

In some embodiments, the number and arrangement positions of the first detachable mechanism 150 and the second detachable mechanism 210 can also be adjusted as needed. For example, one first detachable mechanism 150 can be provided and located approximately in the middle of the rear side surface of the leg rest portion 112, and the second detachable mechanism 210 can correspondingly be provided approximately in the middle of the rod member 220.

In some embodiments, the number and arrangement positions of the connecting mechanism 230 can also be adjusted as needed. For example, one connecting mechanism 230 can be provided and disposed approximately in the middle of the rod member 220.

In some embodiments, the connecting device 200 may not include the rod member 220, and the second detachable mechanism 210 can be connected to the connecting mechanism 230 directly or via other non-tubular intermediate components.

The configuration and connection relationship will be described in detail below by taking one of the first connecting mechanisms 230 and its corresponding second connecting mechanism 230 as an example.

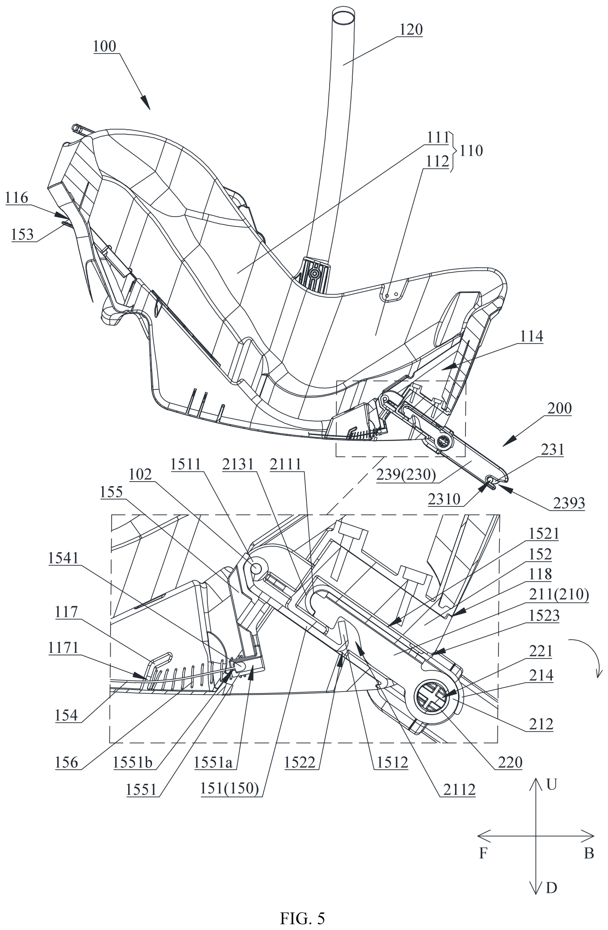

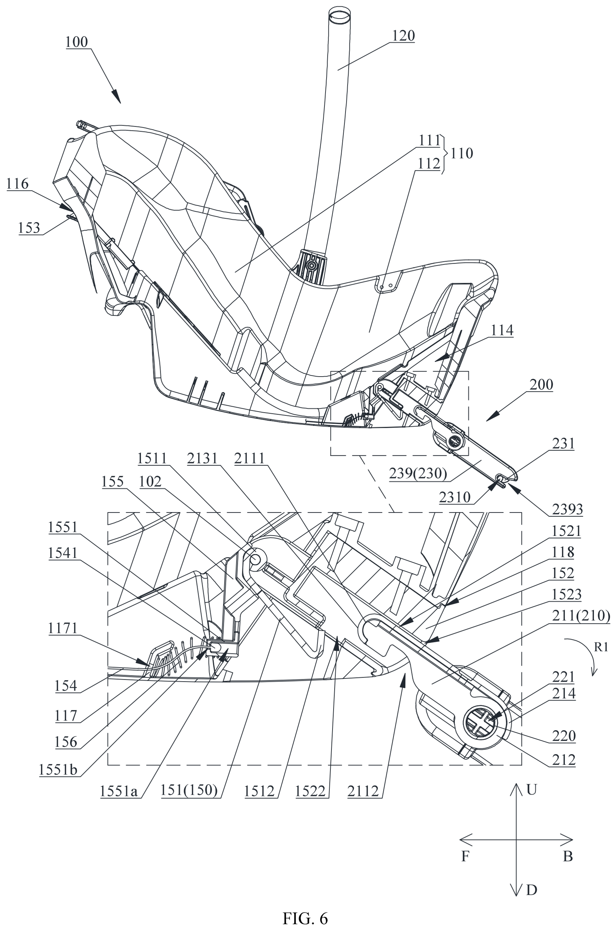

Specifically, as shown in FIGS. 5 and 6, the first detachable mechanism 150 includes a first locking member 151. The first locking member 151 is movably arranged on the carrier body 100 and the first locking member 151 is switchable between a locked position and an unlocked position. In an embodiment, the first locking member 151 is a locking hook and includes a pivot portion 1511 and a hook portion 1512 that are located at its two ends, respectively. The pivot portion 1511 of the first locking member 151 is rotatably provided on the carrier housing 110 via a pivot shaft 102. Specifically, the carrier housing 110 can include a hollow accommodating cavity 114. The first detachable mechanism 150 can further include a fixing base 152 installed in the accommodating cavity 114. Further, the fixing base 152 has an insertion groove 1521 and a through hole 1522 that is in communication with the insertion groove 1521. In an embodiment, the through hole 1522 is provided on the bottom surface of the fixing base 152. When the first locking member 151 is at the locked position, the hook portion 1512 of the first locking member 151 enters the insertion groove 1521 through the through hole 1522; when the first locking member 151 is at the unlocked position, the hook portion 1512 of the first locking member 151 withdraws from the insertion groove 1521 through the through hole 1522. The extending direction of the insertion groove 1521 is inclined relative to the frontward-rearward direction of the carrier body 100.

In some embodiments, the fixing base 152 can be omitted, and the first locking member 151 can be directly inserted into the accommodating cavity 114.

Further, as shown in FIGS. 5 and 6, the first detachable mechanism 150 further includes a first operating member 153. The first operating member 153 is drivingly connected to the first locking member 151. The first operating member 153 is adapted to be operated to drive the first locking member 151 to switch from the locked position to the unlocked position. Referring to FIG. 3, in an embodiment, the first operating member 153 is an unlocking button. Specifically, a receiving groove 115 can be provided approximately in the middle of the backrest portion 111. The first operating member 153 is operably provided in this receiving groove 115. In an embodiment, the receiving groove 115 is in communication with the accommodating cavity 114. One end of the first operating member 153 can be drivingly connected to the first locking member 151 via a traction member 154, such as a steel cable, provided in the accommodating cavity 114. An operation port 116 in communication with the accommodating cavity 114 can be provided on a side of the backrest portion 111 away from the occupant space 113. Another end of the first operating member 153 can be exposed through the operation port 116 on the side of the backrest portion 111 away from the occupant space 113, for operation. The first operating member 153 can be pulled or rotated to drive the first locking member 151 to rotate via the traction member 154.

Further, as shown in FIGS. 5 and 6, the first detachable mechanism 150 can further include a first driving member 155. The first driving member 155 is connected to the first locking member 151, and the first driving member 155 is drivingly connected to the first operating member 153. The first operating member 153 is adapted to be operated to drive the first driving member 155 to move, and the first driving member 155 drives the first locking member 151 to switch from the locked position to the unlocked position. Specifically, the first driving member 155 and the first locking member 151 are fixedly connected to each other by a fastener (not shown in the figures), such as a screw or rivet, so that the first driving member 155 and the first locking member 151 can rotate together. In other embodiments, the first driving member 155 and the first locking member 151 can also be integrally formed. The first driving member 155 has a traction portion 1551. The traction portion 1551 is provided with a receiving cavity 1551a and a receiving hole 1551b in communication with the receiving cavity 1551a. A traction end head 1541 protrudes from a first end of the traction member 154 away from the first operating member 153. The traction end head 1541 is received in the receiving cavity 1551a. In the same direction, the width of the traction end head 1541 is always greater than the width of the receiving hole 1551b, so that the traction end head 1541 is confined within the receiving cavity 1551a, achieving the connection between the first end of the traction member 154 and the first driving member 155. A second end of the traction member 154 and the first operating member 153 can also be connected to each other in a similar manner or can be directly connected to each other.

Further, as shown in FIGS. 5 and 6, the first detachable mechanism 150 can further include a driving reset member 156. The driving reset member 156 is adapted to apply a force to the first driving member 155 to cause the first driving member 155 to drive the first locking member 151 to switch from the unlocked position to the locked position. In an embodiment, the driving reset member 156 can be a spring. A pushing member 117 can be provided in the accommodating cavity 114. The pushing member 117 is connected to the cavity wall of the accommodating cavity 114. One end of the driving reset member 156 is connected to the pushing member 117, and another end of the driving reset member 156 abuts against the traction portion 1551 of the first driving member 155. In an embodiment, the driving reset member 156 is sleeved outside at least a portion of the traction member 154. The first end of the traction member 154 is connected to the traction portion 1551, and a second end of the traction member 154 extends forward through a penetration hole 1171 in the pushing member 117 to the backrest portion 111 of the carrier housing 110 to be connected to the first operating member 153.

Further, as shown in FIGS. 5 and 6, the second detachable mechanism 210 includes a second locking member 211. The second locking member 211 is substantially elongated. One end of the second locking member 211 is provided with a mounting ring 212. The mounting ring 212 is sleeved on the rod member 220 to achieve the connection between the second locking member 211 and the rod member 220. Another end of the second locking member 211 has an arc-shaped end surface 2111. The lower side surface of the second locking member 211 is provided with a groove portion 2112. Specifically, the fixing base 152 is further provided with an insertion hole 1523 that can be in communication with the insertion groove 1521. At least a portion of the second locking member 211 can be inserted into the insertion groove 1521 through the insertion hole 1523. In an embodiment, the fixing base 152 is installed on the relatively rear side of the carrier housing 110. The relatively rear side of the carrier housing 110 is provided with a mounting port 118 in communication with the accommodating cavity 114. The fixing base 152 is inserted into the accommodating cavity 114 through the mounting port 118, and the rear side surface of the fixing base 152 is exposed through the mounting port 118. The insertion hole 1523 is provided on the rear side surface of the fixing base 152, i.e., the insertion hole 1523 is exposed to allow at least a portion of the second locking member 211 to be inserted into the insertion groove 1521 through the insertion hole 1523.

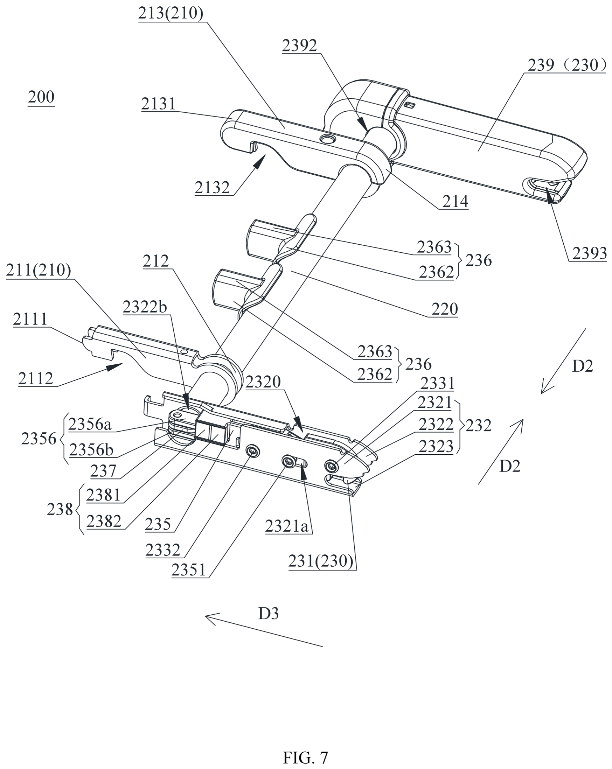

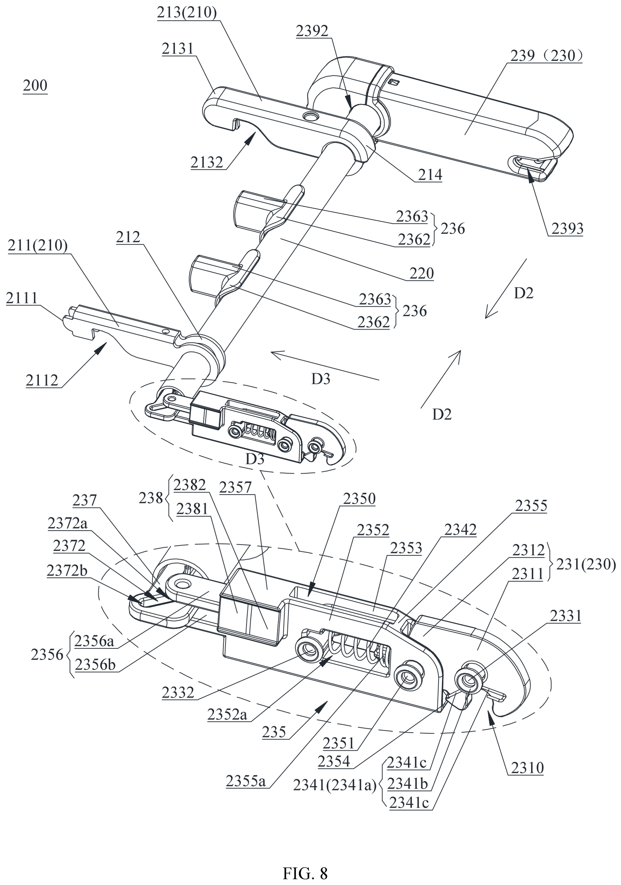

Further, as shown in FIGS. 7 and 8, the second detachable mechanism 210 further includes a first housing 213. The first housing 213 covers the outside of the second locking member 211 and is connected to the second locking member 211, or in other words, the second locking member 211 is embedded in the first housing 213. The first housing 213 can protect the second locking member 211. In an embodiment, the first housing 213 is substantially a rectangular housing structure. The bottom surface of the first housing 213 is provided with a secondary groove portion 2132. The position of the secondary groove portion 2132 corresponds to the position of the groove portion 2112 of the second locking member 211. The secondary groove portion 2132 allows the groove portion 2112 to be exposed, and the hook portion 1512 of the engagement member 231 can be also engaged into the secondary groove portion 2132. One end of the first housing 213 is further provided with a secondary mounting ring 214. The secondary mounting ring 214 covers the outside of the mounting ring 212. The secondary mounting ring 214 is also sleeved on the outside of the rod member 220. Another end of the first housing 213 is provided with an arc-shaped secondary end surface 2131. The secondary end surface 2131 covers the outside of the end surface 2111 of the second locking member 211.

The processes of connecting the connecting device 200 to the carrier body 100 and disassembling the connecting device 200 from the carrier body 100 are described in details below.

As shown in FIG. 5, when the connecting device 200 is to be separated from the carrier body 100, the first operating member 153 can be pulled. Then, the first operating member 153 pulls the traction member 154 to move away from the connecting mechanism 230, so that the first operating member 153 drives the first driving member 155 to rotate via the traction member 154. Specifically, the traction member 154 drives the first driving member 155 to rotate clockwise (i.e., in the direction R1 in FIG. 5) from the perspective of FIG. 5. At this time, the driving reset member 156 is compressed and deformed. When the first driving member 155 rotates, first driving member 155 simultaneously drives the first locking member 151 connected thereto to rotate in the direction R1. When the first locking member 151 rotates from the locked position to the unlocked position, the hook portion 1512 of the first locking member 151 moves out of the insertion groove 1521 through the through hole 1522, thereby disengaging from the groove portion 2112 of the second locking member 211. As such, the second locking member 211 can be pulled out of the insertion groove 1521 through the insertion hole 1523, thereby separating the first detachable mechanism 150 from the second detachable mechanism 210, i.e., disassembling the carrier body 100 from the connecting device 200, as shown in FIG. 6. Then, the first operating member 153 can be released, the first driving member 155 is allowed to rotate and reset in the direction opposite to the direction R1 under the elastic restoring force of the driving reset member 156, and drives the first locking member 151 to rotate from the unlocked position back to the locked position.

As shown in FIG. 6, when the connecting device 200 is connected to the carrier body 100, at least a portion of the second locking member 211, together with a portion of the first housing 213, can be inserted into the insertion groove 1521 through the insertion hole 1523. During the process of inserting the second locking member 211 and the first housing 213 into the insertion groove 1521, the arc-shaped secondary end surface 2131 of the first housing 213 pushes against the hook portion 1512 of the first locking member 151, causing the first locking member 151 to rotate clockwise (i.e., in the direction R1 in FIG. 6) from the perspective of FIG. 6 to the unlocked position. Thus, the second locking member 211 can continue to move toward the bottom of the insertion groove 1521. At this time, the driving reset member 156 is compressed and deformed. When the second locking member 211 and the first housing 213 are inserted into place, and the arc-shaped secondary end surface 2131 of the first housing 213 abuts against the bottom of the insertion groove 1521, the groove portion 2112 of the second locking member 211 is opposed to the through hole 1522. At this moment, the arc-shaped secondary end surface 2131 of the first housing 213 does not push against the first locking member 151. Therefore, under the elastic restoring force of the driving reset member 156, the first locking member 151 is rotated in the direction opposite to the direction R1 and is reset to the locked position. That is, the hook portion 1512 of the first locking member 151 extends into the insertion groove 1521 through the through hole 1522, and is locked with the groove portion 2112.

In some embodiments, alternatively, the second locking member 211 is switchable between a locked position and an unlocked position. When the second locking member 211 is at the locked position, the second locking member 211 is adapted to be locked with the first locking member 151; when the second locking member 211 is at the unlocked position, the second locking member 211 is adapted to be unlocked from the first locking member 151.

In some embodiments, the first locking member 151 can be provided with the groove portion 2112, and the second locking member 211 can be provided with the hook portion 1512 that can be locked with or unlocked from the groove portion 2112. The first operating member 153, the traction member 154, the first driving member 155, and the driving reset member 156, and the like, can be correspondingly provided on the connecting device 200.

In some embodiments, the first locking member 151 and the second locking member 211 can also have other forms. For example, both the first locking member 151 and the second locking member 211 can be engaging hooks that can engage with each other, or the first locking member 151 and the second locking member 211 can have magnetic structures that can attract each other, or the like.

By way of illustration, the configuration and positional relationship of one of the connecting mechanisms 230 are described in detail below.

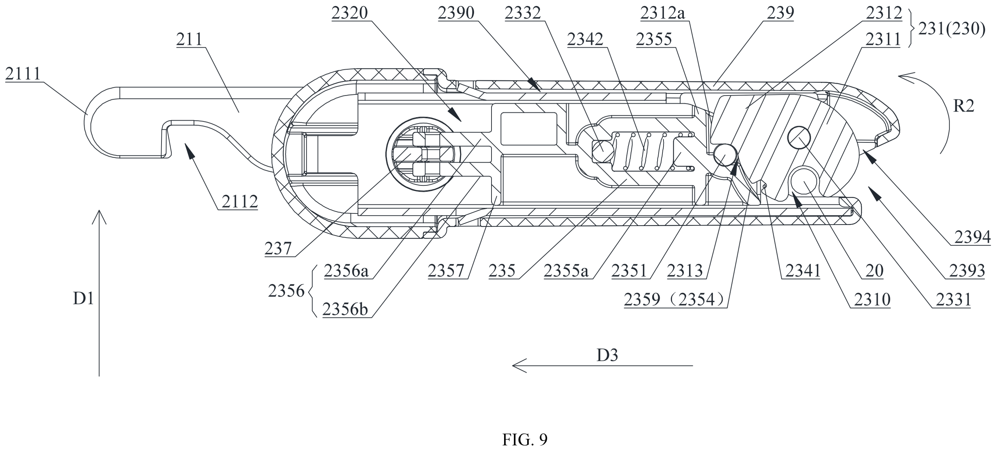

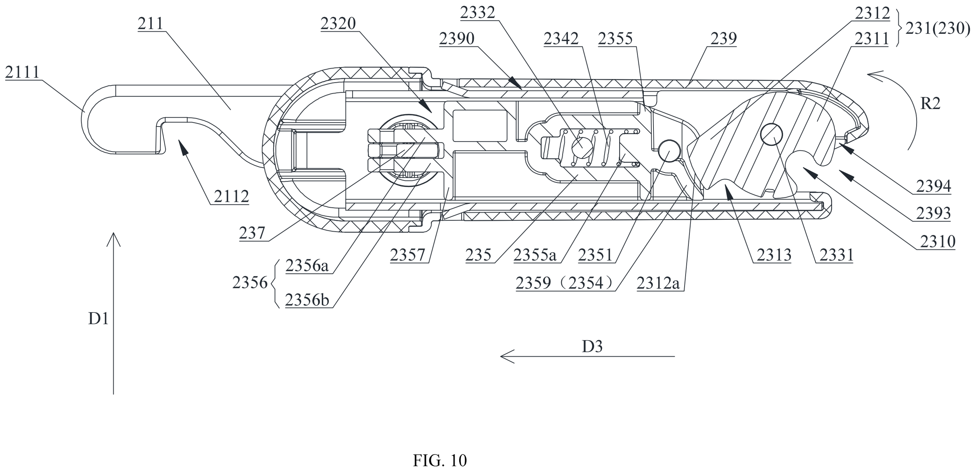

Specifically, as shown in FIGS. 7 and 8, the connecting mechanism 230 can include an engagement member 231. The engagement member 231 is switchable between a closed position and an open position. The engagement member 231 has an engagement hole 2310. When the engagement member 231 is at the closed position, as shown in FIG. 9, the engagement hole 2310 of the engagement member 231 is adapted to engage with an engagement rod 20 of the vehicle seat. When the engagement member 231 is at the open position, as shown in FIG. 10, the engagement hole 2310 of the engagement member 231 is adapted to disengage from the engagement rod 20 of the vehicle seat. In an embodiment, the connecting mechanism 230 further includes a bracket 232. The bracket 232 includes a first mounting member 2321, a second mounting member 2322 arranged opposite to the first mounting member 2321, and a connecting member 2323 connected between the first mounting member 2321 and the second mounting member 2322. The first mounting member 2321, the second mounting member 2322, and the connecting member 2323 enclose to form a mounting groove 2320. The engagement member 231 is rotatably provided on the bracket 232. Specifically, the engagement member 231 is located in the mounting groove 2320 and is pivotally connected to the first mounting member 2321 and the second mounting member 2322 via a pivot pin 2331. The bracket 232 is configured to, on one hand, facilitate the mounting of other components such as the engagement member 231, in the connecting mechanism 230, and on the other hand, reinforce the overall strength of the connecting mechanism 230. In an embodiment, the bracket 232 is connected to one end of the rod member 220. The bracket 232 extends substantially perpendicular to the rod member 220. The bracket 232 and the second locking member 211 extend in opposite directions with respect to the rod member 220. With such configuration, the connecting device 200 can be conveniently connected to the carrier body 100 on one side, and connected to the vehicle seat on another side.

Further, as shown in FIG. 8, the connecting mechanism 230 further includes an engagement reset member 2341. The engagement reset member 2341 is adapted to apply a force to the engagement member 231 to cause the engagement member 231 to pivot toward the open position. In an embodiment, the engagement reset member 2341 can be a torsion spring 2341a. The torsion spring 2341a is also located in the mounting groove 2320. A main body part 2341b of the torsion spring 2341a is sleeved on the pivot pin 2331. Two end portions 2341c of the torsion spring 2341a abut against the engagement member 231 and the bracket 232, respectively. The torsion spring 2341a is configured to constantly urge the engagement member 231 to pivot toward the open position as shown in FIG. 10.

Further, as shown in FIGS. 9 and 10, the connecting mechanism 230 further includes a second driving member 235. The second driving member 235 is switchable between a first position and a second position. When the second driving member 235 is at the first position, the second driving member 235 limits the engagement member 231 in the closed position. When the second driving member 235 is at the second position, the second driving member 235 allows the engagement member 231 to switch to the open position. Specifically, the second driving member 235 is substantially elongated. The second driving member 235 is movably provided in the mounting groove 2320 and is switchable relative to the bracket 232 between the first position and the second position. One end of the second driving member 235 away from the rod member 220, i.e., an end adjacent to the engagement member 231, is provided with a limiting pin 2351. Specifically, as shown in FIG. 8, the second driving member 235 includes a first mounting portion 2352, a second mounting portion 2353, and a connecting plate 2354 connected between the first mounting portion 2352 and the second mounting portion 2353. The first mounting portion 2352, the second mounting portion 2353, and the connecting plate 2354 collectively form a limiting groove 2350. The limiting pin 2351 extends through the limiting groove 2350, with its two ends connected to the first mounting portion 2352 and the second mounting portion 2353, respectively. The engagement member 231 includes a pivot connection portion 2311 and a blocking portion 2312 connected to each other. In an embodiment, the pivot connection portion 2311 and the blocking portion 2312 of the engagement member 231 are integrally formed. In other embodiments, the engagement member 231 can also be formed by connecting an independent pivot connection portion 2311 and an independent blocking portion 2312 by means of fusion welding or welding, etc. The pivot connection portion 2311 is substantially circular and is pivotally connected to the first mounting portion 2352 and the second mounting portion 2353 via the pivot pin 2331. A portion of the edge of the pivot connection portion 2311 is recessed toward the pivot pin 2331 to form the above engagement hole 2310. The blocking portion 2312 protrudes from the edge of the pivot connection portion 2311 and is substantially rectangular. A recess 2313 is formed between the blocking portion 2312 and the pivot connection portion 2311. The blocking portion 2312 also has a blocking surface 2312a. In an embodiment, the blocking surface 2312a is arranged to be away from the engagement hole 2310 and away from the pivot pin 2331 relative to the recess 2313. When the second driving member 235 is at the first position, the limiting pin 2351 abuts against the blocking portion 2312 to limit the engagement member 231 in the closed position as shown in FIG. 9. In this case, the limiting pin 2351 engages into the recess 2313. In an embodiment, the engagement reset member 2341 is adapted to apply a force to the engagement member 231 to cause the engagement member 231 to rotate to the open position, more specifically, the engagement member 231 rotates counterclockwise (i.e., in the direction R2 from the perspective of FIG. 9) to the open position. When the second driving member 235 is at the first position, the limiting pin 2351 is located in the movement path of the blocking portion 2312 in the direction R2, thereby restricting the engagement member 231 from continuing to rotate in the direction R2 under the action of the engagement reset member 2341, thus maintaining the engagement member 231 in the closed position.

Further, as shown in FIGS. 7, 15, and 16, the first mounting member 2321 is further provided with a first elongated hole 2321a, and the second mounting member 2322 is further provided with a second elongated hole 2322a. Two ends of the limiting pin 2351 are also inserted into the first elongated hole 2321a and the second elongated hole 2322a, respectively, and can move along the first elongated hole 2321a and the second elongated hole 2322a.

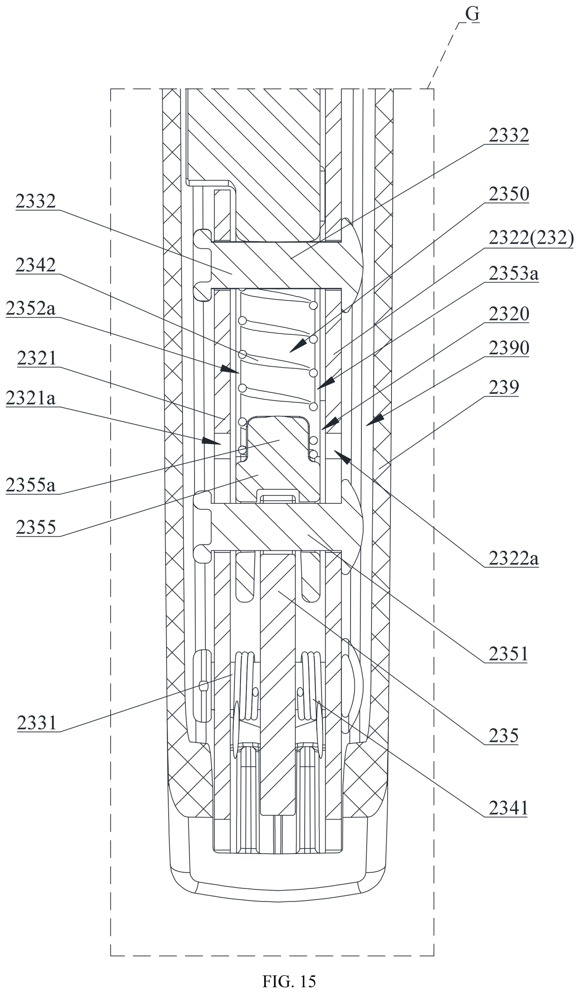

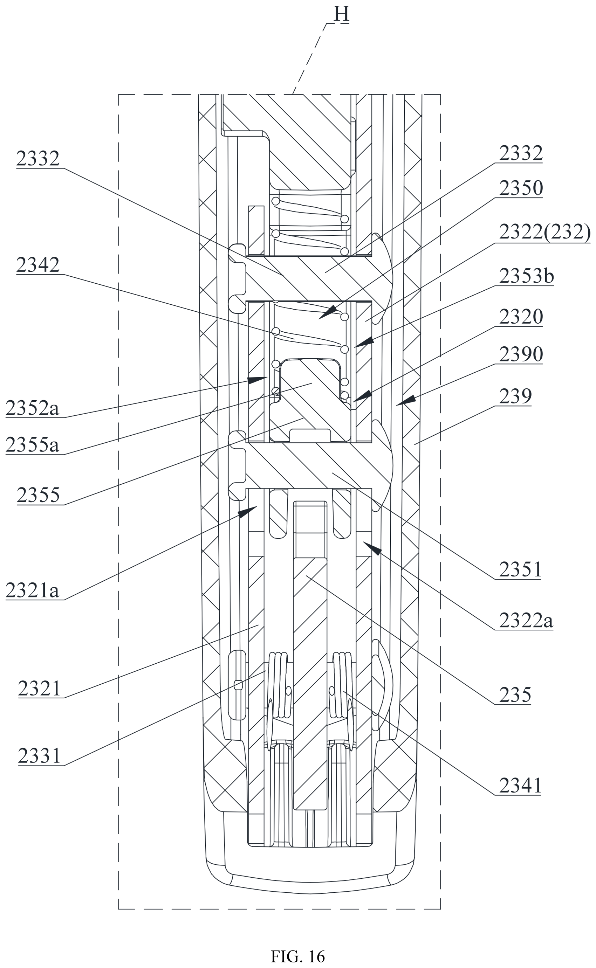

Further, as shown in FIGS. 9 and 10, the connecting mechanism 230 further includes a limiting reset member 2342. The limiting reset member 2342 is adapted to apply a force to the second driving member 235 to cause the second driving member 235 to move toward the first position. In an embodiment, the limiting reset member 2342 is a spring. Specifically, referring to FIGS. 15 and 16, the first mounting portion 2352 is further provided with a first mounting hole 2352a, at approximately its middle part, and the second mounting portion 2353 is further provided with a second mounting hole 2353a, at approximately its middle part. The first mounting hole 2352a and the second mounting hole 2353a are in communication with the limiting groove 2350. The first mounting hole 2352a and the second mounting hole 2353a both extend along the length direction of the second driving member 235. The connecting mechanism 230 further includes a blocking pin 2332. One end of the blocking pin 2332 is connected to the first mounting member 2321. The blocking pin 2332 extends through the first mounting hole 2352a, the limiting groove 2350, and the second mounting hole 2353a. Another end of the blocking pin 2332 is connected to the second mounting portion 2353. An abutting portion 2355 is further provided between the first mounting portion 2352 and the second mounting portion 2353. The abutting portion 2355 is closer to the engagement member 231 than the blocking pin 2332. A sleeve column 2355a is provided on the surface of the abutting portion 2355 facing the blocking pin 2332. One end of the limiting reset member 2342 abuts against the blocking pin 2332, and another end of the limiting reset member 2342 is sleeved on the sleeve column 2355a and abuts against the abutting portion 2355. In some embodiments, the positions of the abutting portion 2355 and the blocking pin 2332 can be interchanged, that is, the abutting portion 2355 can be farther away from the engagement member 231 than the blocking pin 2332.

Further, as shown in FIGS. 7 and 8, the connecting mechanism 230 further includes a second operating member 236. The second operating member 236 is drivingly connected to the second driving member 235. The second operating member 236 is adapted to be operated to drive the second driving member 235 to switch from the first position to the second position. Further, the connecting mechanism 230 further includes a linkage member 237. A first end of the linkage member 237 is connected to the second operating member 236, and a second end of the linkage member 237 is drivingly connected to the second driving member 235. The second operating member 236 is adapted to be operated to drive the linkage member 237 to move, and the linkage member 237 drives the second driving member 235 to switch from the first position to the second position.

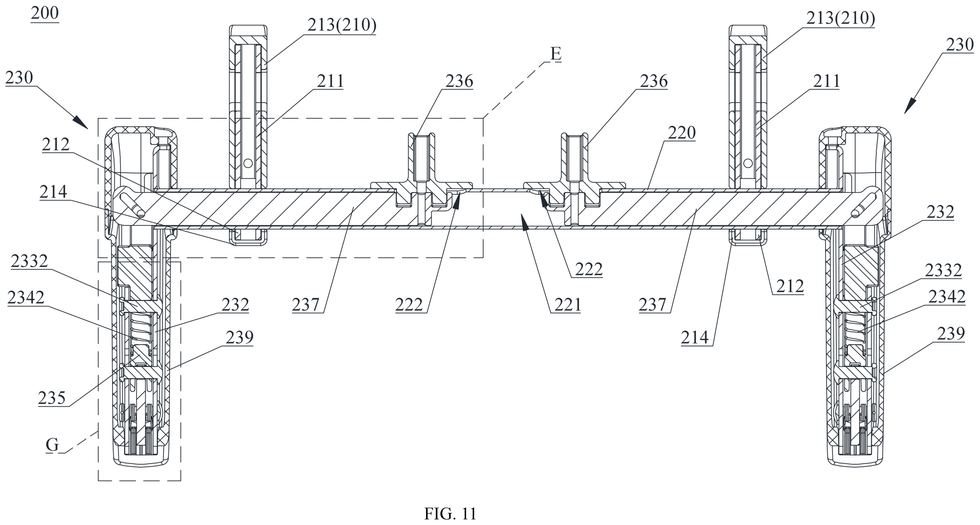

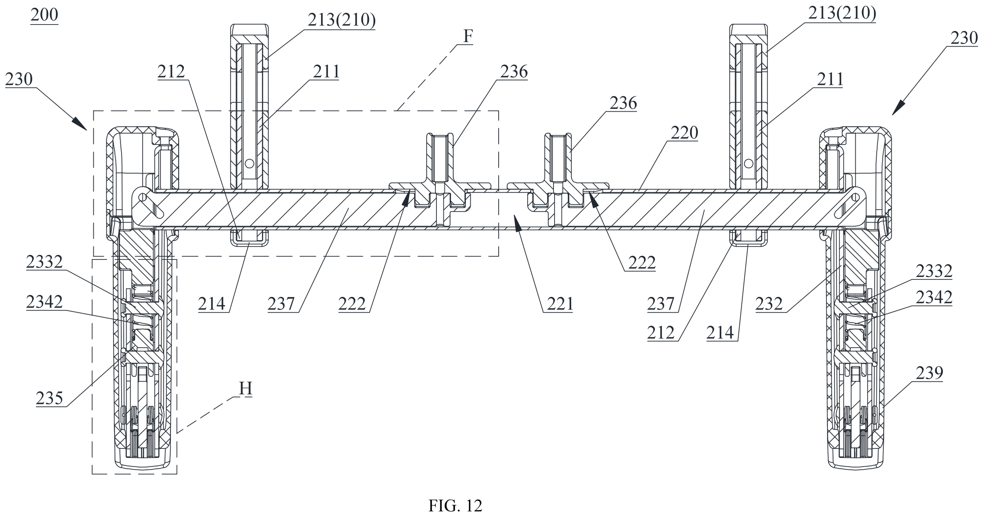

In an embodiment, as shown in FIGS. 11 to 14, the second operating member 236 can be a push button. The second operating member 236 includes a positioning portion 2361, a shielding portion 2362, and an operation portion 2363 that are connected to each other. In an embodiment, the second operating member 236 is an integrally formed structure. In other embodiments, the second operating member 236 can also be formed by connecting an independent positioning portion 2361, an independent shielding portion 2362, and an independent operation portion 2363 through riveting or fusion welding, etc.

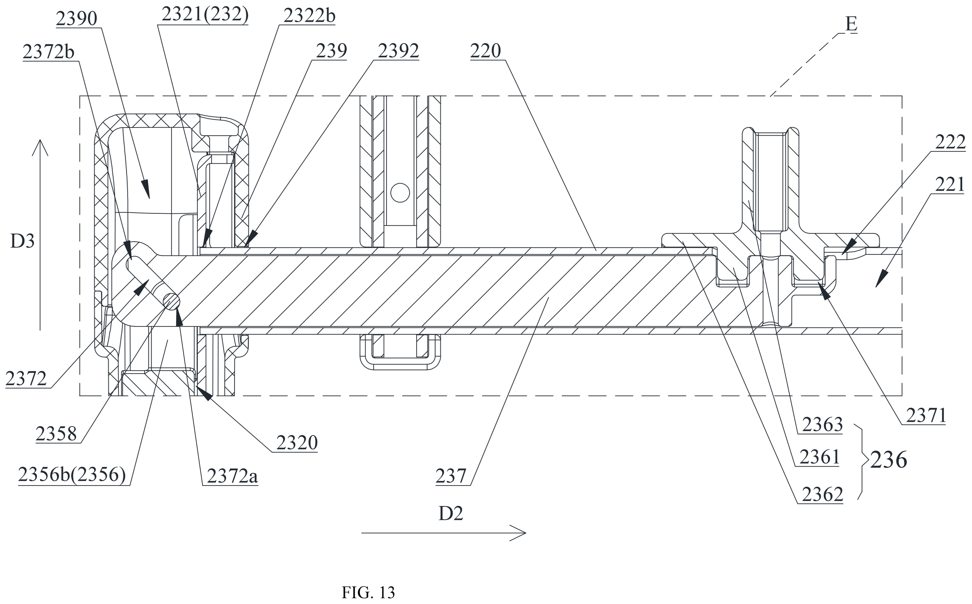

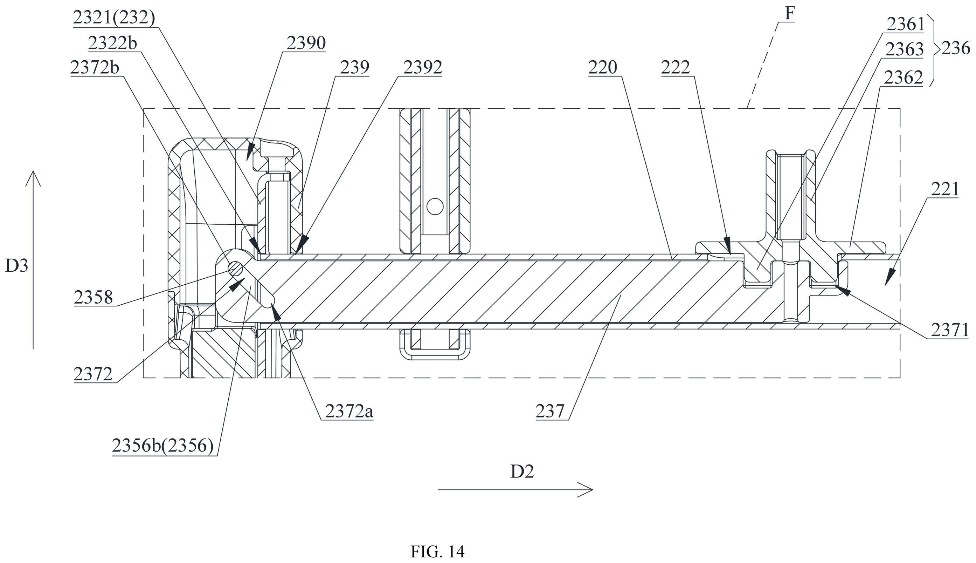

Specifically, as shown in FIGS. 13 and 14, the rod member 220 has a hollow cavity 221. A strip-shaped hole 222 in communication with the hollow cavity 221 is provided on the side wall of the rod member 220. The strip-shaped hole 222 extends along the length direction of the rod member 220. The linkage member 237 is movably provided in the hollow cavity 221. There are two positioning portions 2361 spaced apart on one side of the operation portion 2363. The first end of the linkage member 237 is provided with two positioning holes 2371. The two positioning portions 2361 extend into the hollow cavity 221 through the strip-shaped hole 222 and are respectively inserted into the two positioning holes 2371. The two positioning portions 2361 can slide along the strip-shaped hole 222. In an embodiment, the shielding portion 2362 has a sheet-like structure, more specifically, an arc-shaped and sheet-like structure. The shielding portion 2362 extends in a direction away from the operation portion 2363, from the edge of the operation portion 2363. The length and width of the shielding portion 2362 are respectively greater than the length and width of the strip-shaped hole 222. Thus, during the sliding of the two positioning portions 2361 along the strip-shaped hole 222, the shielding portion 2362 can always shield the strip-shaped hole 222, thereby avoiding pinching. The operation portion 2363 protrudes outside the rod member 220 for the user to push and operate. Further, the second operating member 236 is also secured to the one end of the linkage member 237 via a fastener (not shown in the drawings), such as a rivet or screw. In an embodiment, the fastener is located between the two positioning portions 2361. The fastener extends through the operation portion 2363 and the first end of the linkage member 237 to secure the second operating member 236 to the first end of the linkage member 237. As such, the connection between the second operating member 236 and the linkage member 237 can be achieved.

In other embodiments, the number and arrangement positions of the positioning portions 2361 can be adjusted as needed. The fastener may not be located between the two positioning portions 2361, but may alternatively be disposed at other positions. For example, the fastener can extend through the positioning portion 2361 and the first end of the linkage member 237 to achieve the connection between the second operating member 236 and the linkage member 237, etc., which is not limited herein by the present invention.

Further, as shown in FIGS. 7 and 8, the second end of the linkage member 237 is drivingly connected to the second driving member 235. Specifically, the second mounting member 2322 is provided with a communication hole 2322b in communication with the mounting groove 2320. The one end of the rod member 220 is inserted into the mounting groove 2320 through the communication hole 2322b, thereby achieving communication between the hollow cavity 221 of the rod member 220 and the mounting groove 2320. An end of the second driving member 235 away from the engagement member 231 forms a driving assembly 2356. The driving assembly 2356 specifically includes a first driving portion 2356a and a second driving portion 2356b arranged facing each other. In an embodiment, the first driving portion 2356a and the second driving portion 2356b are arranged parallel to each other. The first driving portion 2356a and the second driving portion 2356b are spaced apart in a direction D1 in FIG. 9. The direction D1 is perpendicular to the extending direction of the second driving member 235. Specifically, the second driving member 235 further includes a connection portion 2357. Two sides of the connection portion 2357 are connected to an end of the first mounting portion 2352 away from the engagement member 231 and an end of the second mounting portion 2353 away from the engagement member 231, respectively. The first driving portion 2356a and the second driving portion 2356b are connected to the connection portion 2357, respectively.

In an embodiment, as shown in FIGS. 13 and 14, the second end of the linkage member 237 (i.e., the end away from the second operating member 236) extends into the mounting groove 2320 through the communication hole 2322b to be connected to the driving assembly 2356 of the second driving member 235. In other embodiments, the driving assembly 2356 of the second driving member 235 can also be arranged to extend into the hollow cavity through the communication hole 2322b to be drivingly connected to the second end of the linkage member 237 (i.e., the end away from the second operating member 236).

Specifically, as shown in FIGS. 8, 13, and 14, the second end of the linkage member 237 is provided with a driving oblique slot 2372. A driving pin 2358 is connected between the first driving portion 2356a and the second driving portion 2356b of the second driving member 235. The driving pin 2358 is inserted into the driving oblique slot 2372 and can move along the driving oblique slot 2372. In an embodiment, the driving oblique slot 2372 gradually approaches the engagement member 231 in the direction toward the second operating member 236 (i.e., a direction D2 in FIG. 13). Therefore, when the second operating member 236 is pushed in the direction D2 in FIG. 13, the second operating member 236 drives the linkage member 237 to move in the direction D2, causing the driving pin 2358 inserted in the driving oblique slot 2372 to move from the first end 2372a of the driving oblique slot 2372 to the second end 2372b of the driving oblique slot 2372. Since the second end 2372b is farther away from the engagement member 231 than the first end 2372a, the second driving member 235 moves in the direction away from the engagement member 231 (i.e., a direction D3 in FIG. 13), i.e., moves from the first position to the second position.

In other embodiments, the positions of the driving oblique slot 2372 and the driving pin 2358 can be interchanged. That is, the driving oblique slot 2372 can be provided on the second driving member 235, and the driving pin 2358 can be provided on the linkage member 237, which is not limited herein by the present invention.

Further, as shown in FIGS. 7 and 8, the connecting mechanism 230 further includes an indicator assembly 238. The indicator assembly 238 is connected to the second driving member 235. The indicator assembly 238 has a first indicator mark 2381 and a second indicator mark 2382. The first indicator mark 2381 is configured to indicate that the connecting mechanism 230 is in the connected state. The second indicator mark 2382 is configured to indicate that the connecting mechanism 230 is in the disconnected state. Optionally, the first indicator mark 2381 and the second indicator mark 2382 can be marks with different colors or different patterns. In an embodiment, the first indicator mark 2381 is a green color block, and the second indicator mark 2382 is a red color block. Specifically, referring to FIG. 4, the connecting mechanism 230 further includes a second housing 239. The second housing 239 has a mounting cavity 2390 (see FIGS. 9 and 10). The bracket 232, the second driving member 235, and at least a portion of the engagement member 231 are provided in the mounting cavity 2390. The second housing 239 is provided with an indicator window 2391 in communication with the mounting cavity 2390. When the second driving member 235 is at the first position, the first indicator mark 2381 faces the indicator window 2391 and is visible through the indicator window 2391; when the second driving member 235 is at the second position, the second indicator mark 2382 faces the indicator window 2391 and is visible through the indicator window 2391. As such, the user can judge the connection state of the connecting device 200 through the indicator assembly 238, avoiding accidents due to improper engagement of the engagement member 231.

Further, as shown in FIGS. 4 to 6, one end of the second housing 239 is provided with a communication port 2392 in communication with the mounting cavity 2390. The communication port 2392 is arranged to face the communication hole 2322b of the second mounting member 2322 (see FIG. 7). The one end of the rod member 220 extends through the communication port 2392 and the communication hole 2322b in sequence and extends into the mounting groove 2320. Another end of the second housing 239 is recessed toward the rod member 220 to form an engagement groove 2393. A wall of the engagement groove 2393 is provided with an engagement port 2394 (see FIGS. 9 and 10) in communication with the mounting cavity 2390. The engagement rod 20 of the vehicle seat can extend into the engagement groove 2393, and when the engagement member 231 is at the closed position, the engagement member 231 can extend out of the mounting cavity 2390 to engage with the engagement rod 20 of the vehicle seat.

In an embodiment, as shown in FIG. 4, there are two connecting mechanisms 230 and two second detachable mechanisms 210. The two second detachable mechanisms 210 are located between the two connecting mechanisms 230. That is, the two connecting mechanisms 230 are respectively located outside the two second detachable mechanisms 210. The second housings 239 of the two connecting devices 200 are respectively connected to two ends of the rod member 220. The second operating members 236 of the two connecting devices 200 are movably provided in the middle of the rod member 220, respectively. Each of the first housings 213 of the two second detachable mechanisms 210 is located between the second housing 239 and the second operating member 236 on the corresponding side. In other embodiments, the relative positions of the second housing 239, the second operating member 236, and the first housing 213 on the rod member 220 can also be adjusted as needed. For example, the positions of the second operating member 236 and the first housing 213 can be interchanged, etc., which is not limited herein by the present invention.

Further, as shown in FIG. 4, when the connecting device 200 is connected to the carrier body 10, the two connecting mechanisms 230 can rotate relative to the carrier body 10. In an embodiment, each of the two second detachable mechanisms 210 can be arranged to be sleeved on the rod member 220 via its mounting ring 212 and secondary mounting rings 214, and can rotate around the rod member 220. That is, the rod member 220 can movably rotate within the mounting rings 212 and the secondary mounting rings 214. With such configuration, the two connecting mechanisms 230 can rotate relative to the carrier body 10 via the rod member 220.

In an embodiment, as shown in FIG. 4, the moving direction of the two second operating members 236 is defined as the direction D2, which is parallel to the extending direction of the rod member 220. The direction in which any of the second driving members 235 moves from the first position to the second position is defined as the direction D3, which is perpendicular to the extending direction of the rod member 220. As shown in FIGS. 9 and 10, the direction D1 is also defined, which is perpendicular to both the direction D2 and the direction D3.

When the connecting device 200 is connected to the carrier body 100, the direction D3 is parallel to the extending direction of the insertion groove 1521. That is, the direction D3 is inclined relative to the front-rear direction of the carrier body 100.

The working principle of the connecting mechanism 230 will be described in detail below.

When the connecting device 200 is required to be separated from the vehicle seat, the second operating member 236 can be pushed in the direction D2 shown in FIG. 13. Then, the second operating member 236 drives the linkage member 237 to move along the direction D2. Simultaneously, the linkage member 237 drives the second driving member 235 to move in the direction D3 by means of the cooperation of the driving oblique slot 2372 and the driving pin 2358. As shown in FIG. 9, during the movement of the second driving member 235 in the direction D3, the distance between the abutting portion 2355 and the blocking pin 2332 gradually decreases, and the limiting reset member 2342 is compressed and deformed. When the second driving member 235 moves from the first position to the second position, the limiting pin 2351 of the second driving member 235 and the blocking portion 2312 of the engagement member 231 move away from each other and are spaced apart, that is, in this case, the limiting pin 2351 does not abut against the blocking portion 2312. At this time, the limiting pin 2351 does not abut against the engagement member 231, and the engagement member 231 can rotate in the direction R2 in FIG. 9 to the open position shown in FIG. 10, under the action of the engagement reset member 2341. In this case, the engagement hole 2310 of the engagement member 231 disengages from the engagement rod 20 of the vehicle seat. The engagement rod 20 can be moved out of the engagement groove 2393, and the connecting device 200 can be separated from the vehicle seat. After the engagement rod 20 is moved out of the engagement groove 2393 and the connecting device 200 is separated from the vehicle seat, the second operating member 236 can be released. Then, the second driving member 235 moves in the direction opposite to the direction D3 under the elastic restoring force of the engagement reset member 2341. At this time, since the engagement member 231 is still maintained in the open position under the action of the engagement reset member 2341, the second driving member 235 abuts against the blocking portion 2312, but the limiting pin 2351 does not engage into the recess 2313. Instead, the blocking surface 2312a of the engagement member 231 abuts against a stopping portion 2359 of the second driving member 235. In an embodiment, as shown in FIG. 10, the stopping portion 2359 extends obliquely downward from the limiting pin 2351 in the direction opposite to direction D3. Therefore, the second driving member 235 does not fully move to the first position, but remains between the first position and the second position. The limiting reset member 2342 is also in a certain compressed and deformed state. The second driving member 235 drives the linkage member 237 to move the second operating member 236 in the direction opposite to direction D2 by means of the cooperation of the driving oblique slot 2372 and the driving pin 2358, but the second operating member 236 also does not fully reset.

When the connecting device 200 is required to be connected to the vehicle seat, the connecting device 200 can be brought close to the engagement rod 20 of the vehicle seat, allowing the engagement rod 20 to move into the engagement groove 2393. When the connecting device 200 continues to be pushed toward the engagement rod 20, the engagement rod 20 will enter the engagement hole 2310 of the engagement member 231 and push against the engagement member 231 in the direction D3 shown in FIG. 10, causing the engagement member 231 to rotate around the pivot pin 2331 in the direction opposite to the direction R2. When the engagement member 231 rotates from the open position to the closed position under the pushing effect of the engagement rod 20, the second driving member 235 moves in the direction opposite to the direction D3 shown in FIG. 10 under the elastic restoring force of the limiting reset member 2342 until the limiting pin 2351 engages into the recess 2313. At this time, the blocking portion 2312 of the engagement member 231 is located in the direction D1 of the limiting pin 2351. In this case, the engagement member 231 is maintained in the closed position by the limiting pin 2351. At this time, the engagement reset member 2341 is in a deformed state. Simultaneously, the second driving member 235 drives the linkage member 237 to move in the direction opposite to the direction D2 by means of the cooperation of the driving oblique slot 2372 and the driving pin 2358. The linkage member 237 then simultaneously drives the second operating member 236 to reset. As such, the connection between the connecting device 200 and the vehicle seat is achieved.

The child carrier 10 provided by the present invention has at least the following technical effects.

The aforementioned child carrier 10 includes the carrier body 100 and the connecting device 200. The carrier body 100 includes the first detachable mechanism 150, and the connecting device 200 includes the second detachable mechanism 210. The second detachable mechanism 210 and the first detachable mechanism 150 are capable of being locked with each other or unlocked from each other, thereby achieving a detachable connection between the carrier body 100 and the connecting device 200. The connecting device 200 further includes the connecting mechanism 230 connected to the second detachable mechanism 210, and the connecting mechanism 230 is switchable between the connected state and the disconnected state, enabling the connecting device 200 to be connected to or disconnected from the vehicle seat. As such, when the child carrier 10 is required to be installed on a vehicle seat, the connecting device 200 can be installed on the carrier body 100 by means of the locking between the first detachable mechanism 150 and the second detachable mechanism 210, and the connection between the connecting device 200 and the vehicle seat can be achieved through the connecting mechanism 230 of the connecting device 200, i.e., enabling the connection between the carrier body 100 and the car seat. When the child carrier 10 is required to be carried, the carrier body 100 can be carried alone by unlocking the first detachable mechanism 150 from the second detachable mechanism 210, reducing the weight of the child carrier 10 when carried.

Various technical features of the embodiments as described above can be combined arbitrarily. For the sake of brevity, not all possible combinations of the various technical features in the above embodiments are described. However, as long as there is no contradiction in the combination of these technical features, they should be considered as falling within the scope described in this specification.

The above-described embodiments only represent several implementations of the present application, and the descriptions thereof are specific and detailed, but should not be construed as limiting the scope of the application patent. It should be noted that those of ordinary skill in the art can make several modifications and improvements without departing from the concept of the present application, and these all fall within the protection scope of the present application. Therefore, the protection scope of the patent of the present application shall be subject to the appended claims.

## Claims

1. A child carrier (10), comprising:
a carrier body (100) comprising a first detachable mechanism (150); and
a connecting device (200) detachably connected to the carrier body (100), and comprising:
a second detachable mechanism (210) capable of being locked with or unlocked from the first detachable mechanism (150); and
a connecting mechanism (230) connected to the second detachable mechanism (210), the connecting mechanism (230) being switchable between a connected state and a disconnected state;
wherein when the connecting mechanism (230) is in the connected state, the connecting mechanism (230) is adapted to be connected to a vehicle seat; when the connecting mechanism (230) is in the disconnected state, the connecting mechanism (230) is adapted to be disconnected from the vehicle seat.

2. The child carrier (10) according to claim 1, wherein the first detachable mechanism (150) comprises a first locking member (151), the second detachable mechanism (210) comprises a second locking member (211); and the first locking member (151) and the second locking member (211) are capable of being locked with each other or unlocked from each other.

3. The child carrier (10) according to claim 2, wherein the first locking member (151) comprises a hook portion (1512), the second locking member (211) comprises a groove portion (2112); and the hook portion (1512) and the groove portion (2112) are capable of being locked with each other or unlocked from each other; or
the second locking member (211) comprises a hook portion (1512), the first locking member (151) comprises a groove portion (2112), and the hook portion (1512) and the groove portion (2112) are capable of being locked with each other or unlocked from each other.

4. The child carrier (10) according to claim 2 or 3, wherein the first locking member (151) is movably arranged on the carrier body (100) and is switchable between a locked position and an unlocked position; when the first locking member (151) is at the locked position, the first locking member (151) is adapted to be locked with the second locking member (211), when the first locking member (151) is at the unlocked position, the first locking member (151) is adapted to be unlocked from the second locking member (211);
the first detachable mechanism (150) further comprises:
a first operating member (153) drivingly connected to the first locking member (151), the first operating member (153) being adapted to be operated to drive the first locking member (151) to switch from the locked position to the unlocked position.

5. The child carrier (10) according to claim 4, wherein the first detachable mechanism (150) further comprises:
a first driving member (155) connected to the first locking member (151), the first driving member (155) being drivingly connected to the first operating member (153);
wherein the first operating member (153) is adapted to be operated to drive the first driving member (155) to move, and the first driving member (155) drives the first locking member (151) to switch from the locked position to the unlocked position.

6. The child carrier (10) according to any one of claims 2 to 5, wherein the first locking member (151) is movably arranged on the carrier body (100) and is switchable between a locked position and an unlocked position,
the first detachable mechanism (150) further comprises:
a fixing base (152) provided with an insertion groove (1521) and an insertion hole (1523) in communication with the insertion groove (1521);
wherein at least a portion of the second locking member (211) is adapted to be inserted into the insertion groove (1521) through the insertion hole (1523), when the first locking member (151) is at the locked position, at least a portion of the first locking member (151) is adapted to extend into the insertion groove (1521) and be locked with the second locking member (211); when the first locking member (151) is at the unlocked position, the portion of the first locking member (151) is adapted to be unlocked from the second locking member (211);
and optionally wherein the fixing base (152) is further provided with a through hole (1522) in communication with the insertion groove (1521); when the first locking member (151) is at the locked position, at least a portion of the first locking member (151) is adapted to extend into the insertion groove (1521) through the through hole (1522) and be locked with the second locking member (211); when the first locking member (151) is at the unlocked position, the portion of the first locking member (151) is adapted to move out of the insertion groove (1521) through the through hole (1522) and be unlocked from the second locking member (211).

7. The child carrier (10) according to any one of claims 1 to 6, wherein the connecting mechanism (230) comprises:
an engagement member (231) switchable between a closed position and an open position:
wherein when the engagement member (231) is at the closed position, the engagement member (231) is adapted to be engaged with the vehicle seat; when the engagement member (231) is at the open position, the engagement member (231) is adapted to be disengaged from the vehicle seat.

8. The child carrier (10) according to claim 7, wherein the connecting mechanism (230) further comprises:
a second driving member (235) switchable between a first position and a second position;
when the second driving member (235) is at the first position, the second driving member (235) limits the engagement member (231) in the closed position; when the second driving member (235) is at the second position, the second driving member (235) allows the engagement member (231) to switch to the open position.

9. The child carrier (10) according to claim 8, wherein the connecting mechanism (230) further comprises:
a second operating member (236) drivingly connected to the second driving member (235), the second operating member (236) being adapted to be operated to drive the second driving member (235) to switch from the first position to the second position;
and optionally wherein the connecting mechanism (230) further comprises:
a linkage member (237), one end of the linkage member (237) being connected to the second operating member (236), another end of the linkage member (237) being drivingly connected to the second driving member (235);
wherein the second operating member (236) is adapted to be operated to drive the linkage member (237) to move, and the linkage member (237) drives the second driving member (235) to switch from the first position to the second position.

10. The child carrier (10) according to claim 9, wherein:
one of the linkage member (237) and the second driving member (235) is provided with a driving oblique slot (2372), another of the linkage member (237) and the second driving member (235) is provided with a driving pin (2358);
the driving pin (2358) is inserted into the driving oblique slot (2372) and slides along the driving oblique slot (2372);
the second operating member (236) is adapted to be operated to drive the linkage member (237) to move;
the linkage member (237) drives the second driving member (235) to move from the first position to the second position by means of a cooperation of the driving oblique slot (2372) and the driving pin (2358);
and optionally wherein:
the connecting device (200) further comprises a rod member (220) having a hollow cavity (221);
wherein the linkage member (237) is movably provided in the hollow cavity (221); the rod member (220) is further provided with a strip-shaped hole (222) in communication with the hollow cavity (221); the second operating member (236) is movably provided on the rod member (220);
the second operating member (236) comprises an operation portion (2363) exposed outside the hollow cavity (221) to be operated, and a positioning portion (2361) extending into the hollow cavity (221) through the strip-shaped hole (222) to be connected to the rod member (220).

11. The child carrier (10) according to claim 9 or 10, wherein the connecting mechanism (230) further comprises:
a limiting reset member (2342) adapted to apply a force to the second driving member (235) to cause the second driving member (235) to move toward the first position;
and optionally wherein the connecting mechanism (230) further comprises:
a bracket (232), on which the second driving member (235) being movably provided; and
a blocking pin (2332) fixedly arranged on the bracket (232);
wherein the second driving member (235) comprises an abutting portion (2355), wherein the abutting portion (2355) is located on a side of the blocking pin (2332) adjacent to the engagement member (231); and two ends of the limiting reset member (2342) abut against the blocking pin (2332) and the second driving member (235) respectively.

12. The child carrier (10) according to any one of claims 8 to 11, wherein
the connecting mechanism (230) further comprises:
an indicator assembly (238) connected to the second driving member (235), the indicator assembly (238) having a first indicator mark (2381) and a second indicator mark (2382);
wherein the second housing (239) is provided with an indicator window (2391) in communication with the mounting cavity (2390); when the second driving member (235) is at the first position, the first indicator mark (2381) faces the indicator window (2391) and is visible through the indicator window (2391); when the second driving member (235) is at the second position, the second indicator mark (2382) faces the indicator window (2391) and is visible through the indicator window (2391).

13. The child carrier (10) according to any one of claims 8 to 12, wherein the connecting mechanism (230) further comprises:
a second housing (239) comprising a mounting cavity (2390); the second driving member (235) and at least a portion of the engagement member (231) being provided in the mounting cavity (2390);
wherein when the engagement member (231) is in the closed position, the engagement member (231) is capable of extending out of the mounting cavity (2390) to be engaged with the vehicle seat;
and optionally wherein the second driving member (235) comprises a limiting pin (2351), the engagement member (231) comprises a blocking portion (2312);
when the second driving member (235) is at the first position, the limiting pin (2351) abuts against the blocking portion (2312) to limit the engagement member (231) in the closed position.

14. The child carrier (10) according to claim 6, wherein the second locking member (211) comprises a groove portion (2112), the first locking member (151) comprises a hook portion (1512);
wherein when at least a portion of the second locking member (211) is inserted into the insertion groove (1521), the groove portion (2112) is located within the insertion groove (1521); and when the hook portion (1512) of the first locking member (151) is at a locked position, the hook portion (1512) of the first locking member (151) is adapted to extend into the insertion groove (1521) to be locked with the groove portion (2112).

15. The child carrier (10) according to any one of claims claim 2 to 6, wherein the first locking member (151) is movably arranged on the carrier body (100) and is switchable between a locked position and an unlocked position; when the first locking member (151) is at the locked position, the first locking member (151) is adapted to be locked with the second locking member (211); and when the first locking member (151) is at the unlocked position, the first locking member (151) is adapted to be unlocked from the second locking member (211); or
the second locking member (211) is movably arranged on the connecting device (200) and is switchable between a locked position and an unlocked position; when the second locking member (211) is at the locked position, the second locking member (211) is adapted to be locked with the first locking member (151); when the second locking member (211) is at the unlocked position, the second locking member (211) is adapted to be unlocked from the first locking member (151).
